**Europäisches Patentamt**

**European Patent Office**

**Office européen des brevets**

(19)

(11) Veröffentlichungsnummer : **0 149 084**
**B1**

(12) # EUROPÄISCHE PATENTSCHRIFT

(45) Veröffentlichungstag der Patentschrift :
19.08.87

(51) Int. Cl.⁴ : **H 04 N   5/205**

(21) Anmeldenummer : **84114537.8**

(22) Anmeldetag : **30.11.84**

(54) Schaltung zur Versteilerung der Flanken eines Videosignals.

(30) Priorität : **11.01.84 DE 3400674**

(43) Veröffentlichungstag der Anmeldung :
**24.07.85 Patentblatt 85/30**

(45) Bekanntmachung des Hinweises auf die Patenterteilung : **19.08.87 Patentblatt 87/34**

(84) Benannte Vertragsstaaten :
**AT BE CH DE FR GB IT LI LU NL SE**

(56) Entgegenhaltungen :
**EP-A- 0 077 010**

(73) Patentinhaber : **Deutsche Thomson-Brandt GmbH**
**Hermann-Schwer-Strasse 3 Postfach 2060**
**D-7730 Villingen-Schwenningen (DE)**

(72) Erfinder : **Kluth, Hans-Jürgen**
**Weichselstrasse 11**
**D-7730 Villingen-Schwenningen (DE)**

EP 0 149 084 B1

**Beschreibung**

Videosignale für eine einwandfreie Bildwiedergabe in einem Fernsehempfänger haben im allgemeinen eine Videobandbreite von etwa 5 MHz. In der Praxis kommt es vor, daß ein Videosignal eine verringerte Bandbreite von 2-3 MHz aufweist, z. B. bei der Abtastung schlechter Filme, bei einfachen Kameras, bei der Wiedergabe von Aufzeichnungsgeräten mit verringerter Bandbreite oder bei bandbegrenzten Übertragungsstrecken. Eine derartige verringerte Bandbreite bedeutet bei der Wiedergabe eine verringerte Bildschärfe, insbesondere bei senkrechten Kanten im Bild.

Es ist bekannt, bei einem derartigen Signal die Bildschärfe durch eine Aufbereitung des Videosignals zu verbessern. Bei den hierfür verwendeten Differenzierentzerrern wird dem Videosignal ein Korrektursignal hinzugefügt, das durch 2-fache Differentiation aus dem Videosignal gewonnen ist. Dadurch werden Flanken im Videosignal, die wegen der Bandbegrenzung zu flach verlaufen, versteilert.

Wenn bei einer solchen Schaltung die Amplitude des Korrektursignals für kleine Signalsprünge im Videosignal optimal bemessen ist, können sich bei größeren Signalsprüngen im korrigierten Videosignal extrem hohe Spannungsspitzen ausbilden, die eine subjektive Bildverschlechterung bewirken oder die Synchronisierung stören können.

Zur Vermeidung dieser Nachteile ist es bekannt (DE-C2 31 40 761) oder EP-A1-77 010, jedem der beiden Differnzierstufen zur Gewinnung des Korrektursignals einen so bemessenen Amplitudenbegrenzer zuzuordnen, daß bei großen Signalsprüngen im Videosignal im korrigierten Videosignal keine die Bildwiedergabe verschlechternden oder die Synchronisierung störenden Impulsspitzen auftreten.

Die Wirkung einer derartigen Schaltung ist von dem Frequenzgang des angebotenen Videosignals abhängig. Je nach Frequenzgang kann eine Unterkompensation oder ein Überkompensation des Videosignals auftreten. Bei einer Unterkompensation wird keine ausreichende Erhöhung der Bildschärfe erreicht, während bei einer Überkompensation durch Überbetonung von Kanten ebenfalls eine subjektive Bildverschlechterung auftreten kann.

In der DE-A1 32 26 432 wird eine Schaltung zur Versteilerung der Flanken eines Videosignals beschrieben. Bei dieser Anordnung ist in den Korrektursignalweg ein Hochpass eingeschaltet, um tiefe Frequenzen bei der Korrektur nicht zu berücksichtigen. Dies geschieht, um Plastik im wiedergegebenen Bild zu vermeiden. Die hohen Frequenzen werden dabei vor der ersten Differentiation angehoben.

In der DE-AS 10 39 842 ist ein Verfahren zur künstlichen Kontraststeigerung an Tonwertsprüngen und Konturen in mittels elektronischer Klischiermaschinen herzustellenden Klischees beschrieben, bei dem ein korriergiertes Videosignal mittels eines Amplitudenbegrenzers begrenzt wird. Dies geschieht, um beim Drucken scharfe Kanten zu erhalten. Es handelt sich dabei um die Wiedergabe von unbewegten Bildern. Wegen der vorhandenen großen Zeitkonstanten ist das dort gezeigte Verfahren nicht geeignet, die Signalsprünge von bewegten Bildern zu verbessern.

Der Erfindung liegt die Aufgabe zugrunde, die Schaltung der zuletzt beschriebenen Art so weiterzubilden, daß weitestgehend unabhängig vom Frequenzgang des angebotenen Videosignals eine optimale Signalverbesserung im Sinne einer Erhöhung der Bildschärfe erreicht wird.

Diese Aufgabe wird durch die im Anspruch 1 beschriebene Erfindung gelöst. Vorteilhafte Weiterbildungen der Erfindung sind in den abhängigen Ansprüchen beschrieben.

Durch den Hochpaß im Weg des Korrektursignals wird also zunächst das Korrektursignal zu hohen Frequenzen hin angehoben. Dadurch kommt es bei der Addition des Korrektursignals zu dem angebotenen Videosignal zunächst zu einer Überkompensation, d. h. zu überhöhten Signalamplituden bei hohen Frequenzen. Diese Überkompensation wird daher anschließend durch die Amplitudenbegrenzung auf den Schwarzwert und den Weißwert wieder beseitigt. Durch die Anhebung der hohen Frequenzen im Weg des Korrektursignals und die anschließende Amplitudenbegrenzung wird die Schaltung weitestgehend vom Frequenzgang des angebotenen Videosignals unabhängig, weil durch die Amplitudenanhebung und die Begrenzung praktisch stets der volle Amplitudenbereich ausgenutzt wird. Die Begrenzung hat also einen stabilisierenden Effekt auf die Signalamplitude bei hohen Videofrequenzen. Die hohen Frequenzen werden nicht nur vollständig generiert. Durch die Begrenzung wird z. B. ein sinusförmiger Signalanteil in einen mehr oder weniger rechteckförmigen Signalanteil umgewandelt, wodurch ebenfalls eine Erhöhung der Bildschärfe erreicht wird. Ein weiterer vorteil ergibt sich bei der verarbeitung von Videosignalen von einem Videorecorder. Dabei werden Schwankungen in der Amplitude des Leuchtdichtesignals Y bei höheren Frequenzen durch den erfindungsgemäßen Begrenzer unwirksam und sogenannte Kantenausreißer und Kantenunruhen stark reduziert.

Die Erfindung wird im folgenden anhand der Zeichnung erläutert. Darin zeigen

Figur 1 ein Blockschaltbild der erfindungsgemäßen Schaltung,

Figur 2 ein Ausführungsbeispiel für den Hochpaß,

Figur 3 Kurven zur Erläuterung der Wirkungsweise der Schaltung nach Fig. 1 und

Figur 4 eine vollständige Schaltung für das Blockschaltbild gemäß Fig. 1.

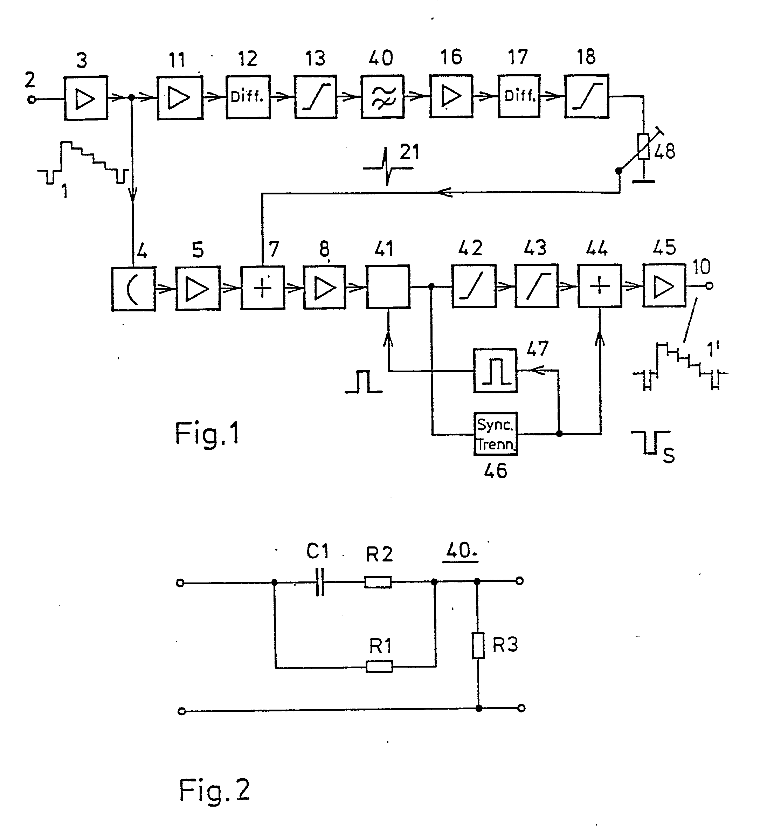

In Fig. 1 gelangt das noch nicht korrigierte Videosignal 1 von der Klemme 2 über den Verstärker 3 an das Laufzeitglied 4 und von dort über den Verstärker 5 zu der Addierstufe 7. Das Videosignal 1 gelangt außerdem über den Verstärker 11 und die erste Differenzierstufe 12 auf den ersten Amplitudenbegrenzer 13. Das einmal differenzierte Videosignal gelangt auf den Hochpaß 40, der eine Anhebung der Signalamplitude mit steigender Videofrequenz bewirkt. Das derart differenzierte und zu hohen Frequenzen in der Amplitude angehobene Videosignal gelangt über den Verstärker 16 und die zweite Differenzierstufe 17 auf den Amplitudenbegrenzer 18. Das am Ausgang des Amplitudenbegrenzers 18 gewonnene Korrektursignal 21 wird mit einer durch das Potentiometer 48 einstellbaren Amplitude der Addierstufe 7 zugeführt und dort dem Videosignal hinzugefügt. Diese Schaltung ohne den Hochpaß 40 ist näher beschrieben in der DE-C2 31 40 761. Das korrigierte Videosignal vom Ausgang der Addierstufe 7 gelangt über den Verstärker 8 auf die Klemmstufe 41 und wird auf den Synchronpegel geklemmt.

Das geklemmte Videosignal vom Ausgang der Klemmstufe 41 wird in dem Amplitudenbegrenzer 42 auf den Schwarzwert und in dem Amplitudenbegrenzer 43 auf den Weißwert begrenzt und dann der Addierstufe 44 zugeführt. Durch die Begrenzung auf den Schwarzwert in der Stufe 42 werden die im Ultraschwarzbereich liegenden Synchronimpuls S beseitigt. Mit der Synchronsignal-Trennstufe 46 werden die synchronimpulse S aus dem Signal vom Ausgang der Klemmstufe 41 abgetrennt und in der Addierstufe 44 dem Videosignal wieder hinzugefügt. Das derart korrigierte und wieder mit Synchronimpulsen S versehene Videosignal 1' gelangt über den Verstärker 45 auf die Ausgangsklemme 10. Die Synchronimpulse S am Ausgang der Abtrennstufe 46 bewirken außerdem über die Umkehrstufe 47 eine getastete Klemmung in der Klemmstufe 41.

Fig. 2 zeigt eine praktische Ausführung für den Hochpaß 40 in Fig. 1. Dabei haben die dargestellten Bauteile folgende Werte

C1 180 pF-1,8 nF
R1 3,9 kOhm
R2 470 Ohm
R3 4,7 kOhm

Der Wert von C1 richtet sich nach der gewünschten Durchlaßkurve des Hochpasses 40. Bei einem Wert von C1 von 180 pF ergibt sich eine Amplitudenanhebung um 4 dB etwa zwischen 1 und 3 MHz, während bei C1 = 1,8 nF eine Amplitudenanhebung um 4 dB zwischen 0,1 und 3 MHz erfolgt.

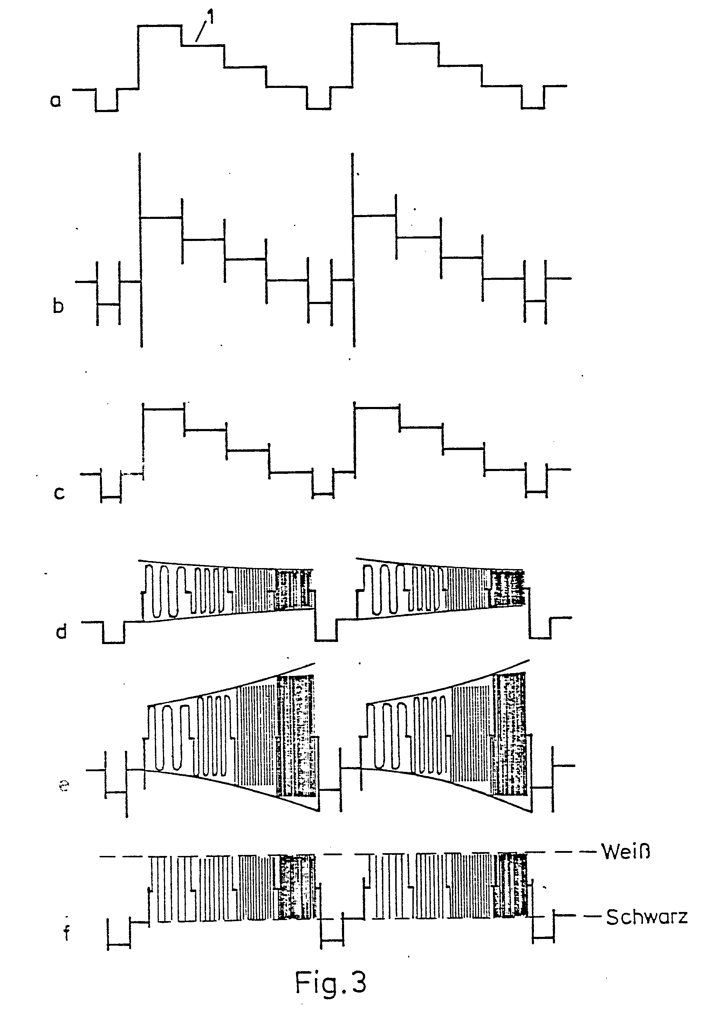

Fig. 3a zeigt das an der Klemme 2 stehende, nicht korrigierte Videosignal 1 mit einer Bandbreite von 3 MHz.

Fig. 3b zeigt ein mit einem bekannten Differenzierentzerrer behandelte Videosignal. Es ist ersichtlich, daß dabei bei den Signalsprüngen störende Spannungsspitzen auftreten, die sich über den Weißwert und Schwarzwert hinaus erstrecken und die Synchronisierung stören können.

Fig. 3c zeigt das erfindungsgemäß aufbereitete BAS-Signal anhand einer Grautreppe. Große und kleine Amplitudensprünge sind annähernd gleichmäßig versteilert, wobei eine Überbetonung größerer Amplitudensprünge wie in Fig. 3b nicht mehr erfolgt.

Fig. 3d zeigt ein sogenanntes Multiburst-Signal. Das Videosignal enthält während der Zeilenhinlaufzeit vier Schwingungspakete mit je einer singulären Videofrequenz, nämlich 1 MHz, 2 MHz, 3 MHz und 4 MHz. Durch den wirksamen Frequenzgang des Übertragungsweges ergibt sich ein Amplitudenabfall zu hohen Frequenzen hin. Dieses Signal würde in Fig. 1 an der Klemme 10 stehen, wenn kein Korrektursignal 21 hinzugefügt wird.

Fig. 3e zeigt ein korrigiertes Videosignal. Durch die Wirkung des Hochpasses 40 entsteht eine Amplitudenanhebung zu hohen Frequenzen hin, die ebenfalls unerwünscht ist. Mit dem Potentiometer 48 ist die Amplitude des Korrektursignals 21 so eingestellt, daß sich bei einem extrem abfallenden Frequenzgang im Videosignal 1 das Signal gemäß Fig. 3e einen etwa konstanten Frequenzgang aufweist. Bei einem geringeren Abfall des Frequenzganges entsteht dann die zu hohen Frequenzen hin zunehmende Amplitudenanhebung des korrigierten videosignals gemäß Fig. 3e.

Fig. 3f zeigt das korrigierte Videosignal, dessen Amplituden durch die beiden Begrenzer 42, 43 in Fig. 1 auf den Schwarzwert und den Weißwert begrenzt sind. Es ist ersichtlich, daß das Videosignal in erwünschter Weise den vollen Amplitudenbereich zwischen schwarz und weiß einnimmt, jedoch keine Signalanteile sich in unerwünschter Weise über den Weißwert oder den Schwarzwert hinaus erstrecken. Außer dieser Amplitudenkorrektur erfolgt durch die Begrenzung eine Impulsumformung der sinusförmigen Schwingungen in Fig. 3d und e in annähernd rechteckförmige Schwingungen gemäß Fig. 3f. Dadurch ergibt sich eine zusätzliche Erhöhung der Bildschärfe insbesondere bei senkrechten Kanten.

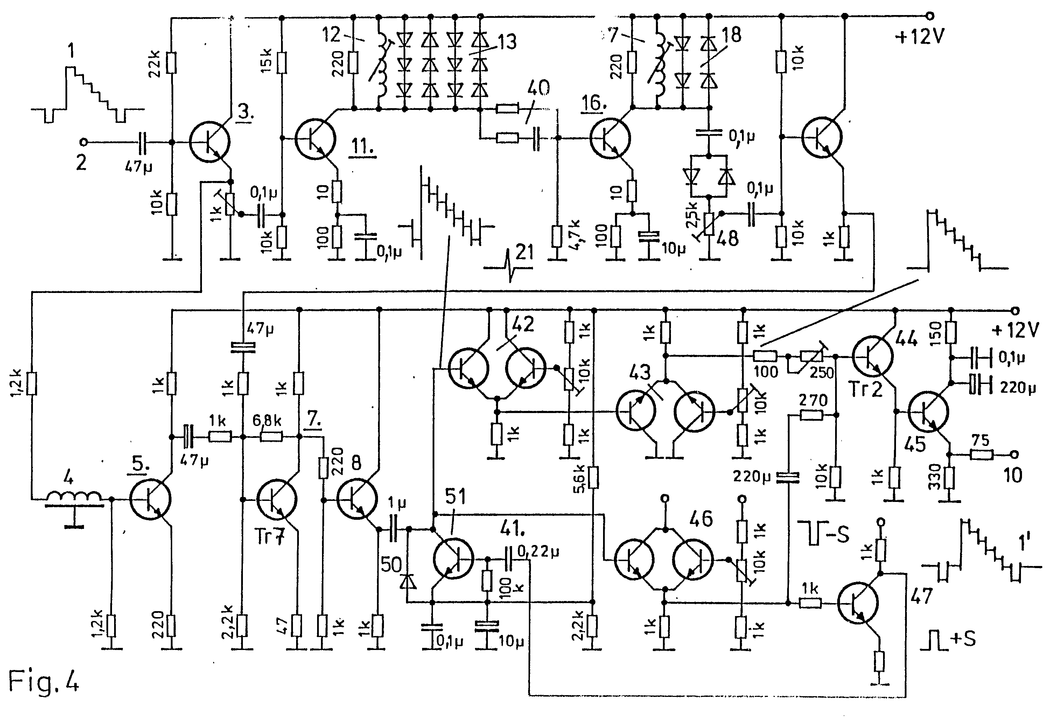

In Fig. 4 sind die Bauteile, die entsprechenden Bauteilen in Fig. 1 entsprechen, mit gleichen Bezugsziffern versehen. Die Addition des Videosignals 1 mit dem Korrektursignal 21 erfolgt an der Basis des die Addierstufe 7 bildenden Transistors Tr7. Die Klemmstufe 41 wird durch die Diode 50 und den Transistor 51 gebildet und arbeitet folgendermaßen. Bei Erscheinen des Videosignals ist zunächst die Diode 50 als Klemmdiode wirksam und klemmt die negativ gerichteten Synchronimpulse auf die konstante Gleichspannung am Emitter des Transistors 51. Bei eingelaufener Schaltung gelangen die mit der Abtrennstufe 46 abgetrennten Synchronimpulse +S über die Umkehrstufe 47 auf die Basis des Transistors 51 und steuern diesen während der Zeilenrücklaufzeit leitend. Die Klemmung mit dem geschalteten Transistor 51 hat den Vorteil, daß ein durchgeschalteter Transistor niederohmiger ist und eine geringere Restspannung aufweist als eine Diode. Am Kollektor des Transistors 51 sind die negativ gerichteten Synchronimpulse -S noch vorhanden und werden mit der Abtrennstufe 46 ausgewertet. In dem Begrenzer 42 werden die Synchronimpulse durch die Begrenzung auf den Schwarzwert beseitigt. Deshalb werden die Synchronimpulse -S vom Ausgang der Abtrennstufe 46 in der durch den Transistor Tr2 gebildeten Addierstufe 44 dem Videosignal wieder hinzugefügt.

**Patentansprüche**

1. Schaltung zur Versteilerung der Flanken eines Videosignals (1), bei der dem Videosignal (1) ein durch zweifache Differentiation (12, 17) des Videosignals (1) gewonnenes Korrektursignal (21) in einer das korrigierte Signal (1') liefernden Addierstufe (7) hinzugefügt wird und Mittel (13, 18) zur Amplitudenbegrenzung des Korrektursignals (21) vorgesehen sind, wobei im Weg des Korrektursignals ein Hochpaß (40) liegt, dadurch gekennzeichnet, daß der Hochpass (40) mit einer zu hohen Videofrequenzen hin zunehmenden Amplitudenanhebung hinter die erste Differnzierstufe (12) geschaltet ist, und daß das korrigierte Signal (1') mit zwei Amplitudenbegrenzern (42, 43) auf den Schwarzwert und Weißwert begrenzt wird.

2. Schaltung nach Anspruch 1, dadurch gekennzeichnet, daß der Hochpaß (40) zwischen den beiden aufeinanderfolgenden Differenzierstufen (12, 17) liegt.

3. Schaltung nach Anspruch 1, dadurch gekennzeichnet, daß das korrigierte Signal (1') vor den Amplitudenbegrenzern (42, 43) in einer Klemmstufe (41) auf den Synchronpegel geklemmt wird.

4. Schaltung nach Anspruch 3, dadurch gekennzeichnet, daß die Klemmstufe (41) eine Klemmdiode (50) und parallel dazu einem durch die abgetrennten Synchronimpulse (5) leitend gesteuerten Transistor (51) enthält.

5. Schaltung nach Anspruch 1, dadurch gekennzeichnet, daß hinter den Amplitudenbegrenzern (42, 43) die durch die Begrenzung auf den Schwarzwert enterten Synchronimpulse (S) dem korrigierten Signal wieder hinzugefügt werden.

6. Schaltung nach Anspruch 1, dadurch gekennzeichnet, daß die Amplitudenanhebung von 1 MHz bis 3 MHz etwa 4 dB beträgt.

**Claims**

1. A circuit for steepening the edges of a video signal (1) wherein a correction signal (21) obtained by double differentiation (12, 17) of the video signal (1) is added to the video signal (1) in an adding stage (7) delivering the corrected signal (1') and means (13, 18) are provided to limit the amplitude of the correction signal (21), a high-pass filter (4) lying in the path of the correction signal, characterised in that the high-pass filter (40) with an amplitude accentuation increasing towards high video frequencies, is connected after the first differentiating stage (12), and that the corrected signal (1') is limited to the black level and white level by two amplitude limiters (42, 43).

2. A circuit according to Claim 1, characterised in that the high-pass filter (40) lies between the two successive differentiating stages (12, 17).

3. A circuit according to Claim 1, characterised in that the corrected signal (1') is clamped to the synchronizing level in a clamping stage (41) before the amplitude limiters (42, 43).

4. A circuit according to Claim 3, characterised in that the clamping stage (41) contains a clamping diode (50) and, parallel thereto, a transistor (51) which is controlled so as to be conducting by the separated synchronizing pulses (5).

5. A circuit according to Claim 1, characterised in that the sync pulses (S) removed by the limitation to the black level are again added to the corrected signal after the amplitude limiters (42, 43).

6. A circuit according to Claim 1, characterised in that the amplitude accentuation from 1 MHz to 3 MHz is about 4 dB.

**Revendications**

1. Circuit pour augmenter la pente des flancs d'un signal vidéo (1), où le signal vidéo est combiné avec un signal de correction (21) obtenu par une double différentiation (12, 17) du signal vidéo (1) dans un étage d'addition (7) fournissant le signal corrigé (1') et où il est prévu des moyens (13, 18) de limitation d'amplitude du signal de correction (21), un filtre passe-haut (40) étant placé dans le trajet du signal de correction, caractérisé en ce que le filtre passe-haut est branché, avec augmentation d'amplitude croissant en direction des hautes fréquences vidéo, en arrière du premier étage de différenciation (12) et en ce que le signal corrigé (1') est limité, au moyen de deux limiteurs d'amplitudes (42, 43), au niveau de noir et au niveau de blanc.

2. Circuit selon la revendication 1, caractérisé en ce que le filtre passe-haut (40) est placé entre les deux étages de différenciation (12, 17) se suivant mutuellement.

3. Circuit selon la revendication 1, caractérisé en ce que le signal corrigé (1') est bloqué au niveau de synchronisation, avant les limiteurs d'amplitudes (42, 43), dans un étage de blocage (41).

4. Circuit selon la revendication 3, caractérisé en ce que l'étage de blocage (41) contient une diode de blocage (50) et, en parallèle à celle-ci, un transistor (51) rendu conducteur par les impulsions de synchronisation séparées (5).

5. Circuit selon la revendication 1, caractérisé en ce que, en arrière des limiteurs d'amplitudes (42, 43), les impulsions de synchronisation (S) enlevées par la limitation au niveau de noir, sont à nouveau introduites dans le signal corrigé.

6. Circuit selon la revendication 1, caractérisé en ce que l'augmentation d'amplitude s'élève à environ 4 dB de 1 MHz à 3 MHz.

**Fig.1**

**Fig.2**

Fig.3

Fig. 4